# EUROPÄISCHE PATENTSCHRIFT

(11) **EP 1 477 761 B1**
(45) Veröffentlichungstag und Bekanntmachung des Hinweises auf die Patenterteilung: **02.11.2016**
(21) Anmeldenummer: 04007595.4
(22) Anmeldetag: 30.03.2004
(51) Int. Cl.: F28D 9/00, F28F 3/08, F28F 3/04, B01D 1/22

(54) **Platten-Wärmeübertrager**
Plate heat exchanger
Échangeur de chaleur à plaques

(30) Priorität: 16.05.2003 DE 10322406
(43) Veröffentlichungstag der Anmeldung: 17.11.2004
(73) Patentinhaber: API Schmidt-Bretten GmbH & Co. KG, 75015 Bretten (DE)
(72) Erfinder: Nickolay, Markus, Dr.-Ing., 76646 Bruchsal (DE); Wagner, Volker, Dipl.-Ing., 75417 Mühlacker (DE)
(74) Vertreter: Lemcke, Brommer & Partner Patentanwälte Partnerschaft mbB

(56) Entgegenhaltungen:
- EP-A2- 0 805 328
- DE-A1- 3 220 774
- FR-A- 834 829
- GB-A- 584 772
- GB-A- 961 419
- GB-A- 2 218 794
- JP-A- 56 000 993
- US-A- 2 248 933

## Beschreibung

Die Erfindung betrifft einen als Verdampfer und/oder Kondensator fungierenden Plattenwärmeübertrager gemäß dem Oberbegriff des Anspruches 1.

Derartige Wärmeübertrager-Platten werden zu einem Paket gestapelt, so dass in den Plattenzwischenräumen abwechselnd das Produkt oder das Heiz-/Kühlmedium strömt. Sie sind in den unterschiedlichsten Bauformen und Profilierungen bekannt und zeichnen sich aufgrund der Spaltströmung durch hohe Wärmeübertragungsleistung aus.

Meist sind die Durchtrittsöffnungen in den vier Ecken der Platte angeordnet, derart, dass zwei diagonal gegenüberliegende Öffnungen als Einströmöffnung und Abströmöffnung für das eine Medium dienen, während die beiden anderen diagonal gegenüberliegenden Öffnungen durch Dichtungen gegenüber diesem ersten Medium getrennt sind und für den Durchfluss des zweiten Mediums zum nächsten Plattenzwischenraum dienen.

Es sind aber auch bereits andere Positionierungen für die Durchtrittsöffnungen in der Platte bekannt. So beschreibt das DE-Patent 32 20 774 der gleichen Anmelderin einen Plattenverdampfer oder -kondensator, bei dem die Platten seitlich herausragende Ausbuchtungen aufweisen, in denen Durchbrechungen angeordnet sind, so dass durchgehende Kanäle entstehen. Diese Kanäle werden insbesondere für die Zuführung des Heizdampfes verwendet. Daneben ist durch die WO 01/90671 eine Wärmeübertragerplatte bekannt, die im unteren, mittleren Bereich zwei nahe benachbarte Einströmöffnungen aufweist, von denen aus das Medium zunächst in eine Zwischenkammer gelangt, so dass die von den beiden Einströmöffnungen kommenden Teilströme sich miteinander vermischen. Danach strömt das Medium entlang des Wärmeübertragungsbereiches zum anderen Plattenrand in eine gemeinsame mittig angeordnete Abströmöffnung.

Aus der US-A-2248933 ist eine Wärmeübertrager-Platte zum Pasteurisieren von Milch bekannt geworden, die einen Wärmeübertragungsbereich und randseitige Dichtungen aufweist. Die Dichtungen sind so verlegt, dass Durchtrittsöffnungen dem jeweiligen Medium und der jeweiligen Seite der Platte zugeordnet werden. An den Längsseiten der Wärmeübertrager-Platte sind am unteren und oberen Rand Kanäle für das Heiz- oder Kühlmedium angeordnet.

Aus der FR 834 829 A ist eine Wärmeübertrager-Platte bekannt geworden, die einen im Wesentlichen rechteckförmigen Wärmeübertragungsbereich mit Dichtungen umfasst. Weiter sind an den Plattenquerseiten mehrere Ein- und Ausströmöffnungen angeordnet.

Von diesem bekannten Stand der Technik ausgehend liegt der vorliegenden Erfindung die Aufgabe zugrunde, eine gleichmäßigere Beaufschlagung des Plattenspaltes durch das einströmende Medium und somit homogener Bedingungen für die Wärmeübertragung und für die Produkttemperatur herbeizuführen. Dabei soll sich die neue Platte durch kostengünstige Herstellung und hohe Betriebssicherheit auszeichnen.

Diese Aufgabe wird erfindungsgemäß bei einem Plattenwärmeübertrager gemäß dem Oberbegriff des Anspruches 1 durch die Merkmale des kennzeichnenden Teils des Anspruches 1 gelöst.

Die Platten des erfindungsgemäßen Plattenwärmeübertragers weisen an den Längsrändern jeweils mehrere in Plattenlängsrichtung nebeneinander angeordnete Dampfkanäle und einen Kondensatkanal für das Heiz- oder Kühlmedium auf. Diese Dampfkanäle und der Kondensatkanal sind nicht mehr wie bisher durch sogenannte "abstehende Ohren" gebildet, sondern liegen innerhalb der annähernd rechteckigen Plattenkontur, wobei vorzugsweise der gesamte Längsrand - einseitig oder beidseitig der Platte - durch Dampf- und Kondensatkanäle gebildet wird. Dieses zur Verfügung stellen mehrerer in die Platte integrierter Dampfkanäle bietet den wesentlichen Vorteil, dass Dampfkanäle intern - also innerhalb des Plattenstapelsmiteinander verbunden werden können. Die bisher notwendigen, außen montierten Umlenkleitungen und Anschlüsse erübrigen sich dadurch. Stattdessen braucht man lediglich die Dichtung zwischen benachbarten Dampfkanälen an einigen Platten wegzulassen, bis ein Übergangsbereich mit hinreichendem Querschnitt zur Verfügung steht. Selbstverständlich kommt die vorgenannte interne Verbindungsmöglichkeit auch für die Kondensatkanäle in Betracht.

Die Einströmöffnungen können sich nahezu über die gesamte Breite des Wärmeübertragungsbereichs erstrecken und bewirken somit eine erheblich gleichmäßigere Beaufschlagung des Plattenspaltes über seine Breite. Temperaturunterschiede in Querrichtung des Plattenspaltes sind dadurch praktisch ausgeschlossen und die Wärmebehandlung des Produktes wird reproduzierbarer und präziser als bisher. Zum anderen führt die direkte Ausrichtung des einströmenden Mediums in den Wärmeübertragungsbereich unter Verzicht auf eine Zwischenkammer, in der es zwangsläufig zu Mischungseffekten kommt, zu einem geringeren Druckverlust.

Theoretisch könnten die Einströmöffnungen auch über Eck angeordnet sein. Besonders zweckmäßig ist es aber, wenn sie nur längs einer Platten-Schmalseite angeordnet sind und sich nahezu über die gesamte Breite des Wärmeübertragungsbereiches erstrecken. Insbesondere sollen die Einströmöffnungen also an der gleichen Plattenseite nebeneinander liegen und ohne dazwischen angeordnete abgedichtete Durchströmöffnungen für das andere Medium.

In Weiterbildung der Erfindung empfiehlt es sich, dass die außen an den Einströmöffnungen angeordnete Dichtung jeweils in den Zwischenraum zwischen benachbarten Einströmöffnungen hineinläuft. Dadurch werden Druckverlust erzeugende Querströmungen und Vermischungen zwischen den ankommenden Teilströmen vermieden. Dies gilt insbesondere dann, wenn die genannte Dichtung weiter in den Zwischenraum zwischen benachbarten Einströmöffnungen hineinläuft als es dem Durchmesser der Einströmöffnungen entspricht. Zweckmäßig sollte die genannte Dichtung so um die Einströmöffnungen herumlaufen, dass sie an jeder Einströmöffnung einen sich in Richtung zum Wärmeübertragungsbereich erweiternden Strömungsquerschnitt anbietet. Die Dichtung soll also nur über den außen liegenden Umfangsbereich der Einströmöffnung herumlaufen und sich zum Plattenzwischenraum hin erweitern, so dass sie dort schräg in den Zwischenraum hineinlaufende Führungsränder bildet im Sinne einer Auffächerung des Strömungsquerschnittes von der kleineren Strömungsbreite in der Einströmöffnung auf eine größere Strömungsbreite im Plattenspalt. Die Einzelströmungen erhalten dadurch eine optimale Ausrichtung hin zum Wärmeübertragungsbereich.

Eine andere zweckmäßige Weiterbildung der Erfindung besteht darin, den Wärmeübertragungsbereich zumindest in der den Einströmöffnungen zugeordneten Plattenhälfte so zu profilieren, dass sich in Kombination mit der Profilierung der Nachbarplatte eine Vielzahl in Plattenlängsrichtung verlaufender, nahezu geradliniger Einzelkanäle ergibt. Man verzichtet hier also bewusst auf das Anbringen schräger Rippen, rasterförmig verteilter Vorsprünge und dadurch ausgelöste Ablenkung der Strömung, um mit möglichst niedrigem Druckverlust auszukommen. Diese Ausgestaltung ist daher besonders für eine Verdampfung des Produktes unter Vakuum geeignet.

Der sich anschließende restliche Wärmeübertragungsbereich, der den auf der anderen Plattenseite wirksamen Einströmöffnungen des Heizmediums zugeordnet ist, hat vorzugsweise eine anderer Profilierung, und zwar eine solche, die auf der Heizmediumseite sowohl Längs- wie auch Querströmungen zulässt. Dadurch begünstigt die mögliche Querströmung auf der Plattenrückseite die Verteilung des von außen kommenden Heizmediums über die gesamte Plattenbreite. Für den Brüdenaustritt sind zwei relativ große Ausströmöffnungen in der Platte vorgesehen.

Eine günstige Weiterbildung der Erfindung in diesem Zusammenhang besteht darin, dass der Kondensatkanal von einer Dichtung umgeben ist, die eine Fläche umschließt, die mindestens 50%, vorzugsweise mindestens 75% derjenigen Fläche beträgt, die von der Dichtung des vom Kondensatkanal am weitesten entfernten Dampfkanals umschlossen wird. Dadurch kann der Kondensatkanal wesentlich größer aus der Platte herausgeschnitten werden als es an sich für die reine Kondensat-Ableitung notwendig wäre, insbesondere kann der Kondensatkanal mit einem ähnlich großen Querschnitt wie ein Dampfkanal hergestellt werden. Daraus ergibt sich der Vorteil, dass der Kondensatkanal wahlweise auch als Dampfkanal eingesetzt werden kann. Das heißt, die gleiche Platte kann wahlweise als Steigfilm- oder als Fallfilmverdampfer eingesetzt werden. Sie braucht dazu nur 180 Grad um ihre Querachse verdreht werden.

Die beschriebene Überdimensionierung der von der Dichtung des Kondensatkanals umschlossenen Fläche bietet darüber hinaus die Möglichkeit, innerhalb dieser Fläche und oberhalb des Kondensatkanals einen weiteren Kanal zur Kondensat-Entlüftung vorzusehen. Dadurch kann auf einen Luft-Abscheider außerhalb des Platten-Wärmeübertragers verzichtet werden.

Nicht zuletzt bilden die nebeneinander angeordneten Dampfkanäle die Möglichkeit, ungenutzte Dampfkanäle für das Einziehen von Spannmitteln zum Zusammenpressen des Plattenpaketes zu verwenden.

Selbstverständlich liegt es auch im Rahmen der Erfindung, dass die Platte in an sich bekannter Weise zumindest auf einer Seite eine etwa mittig in Längsrichtung durchlaufende Dichtung aufweist, derart, dass zwei getrennt nebeneinander angeordnete Strömungsquerschnitte entstehen. Diese Trennung lässt sich auch in der Form realisieren, dass die Platte in Mittellängsrichtung in zwei separate Plattenhälften geteilt ist, die im Verbund mit geteilten oder ungeteilten Platten zusammenpassen. Der Vorteil derart geteilter Platten besteht darin, dass aufgrund der geringeren Plattenfläche auch nur kleinere Presskräfte benötigt werden und dass die Anlage insgesamt individueller auf die Bedürfnisse des Anwenders angepasst werden kann, beispielsweise indem zwei Verdampferstufen mit nur einem Apparat gefahren werden.

Auch bieten derart separate Plattenhälften die Möglichkeit, im Zwischenraum Spannmittel zum Zusammenpressen des Plattenpaketes zu verlegen.

Weitere Merkmale und Vorteile der Erfindung ergeben sich aus der nachfolgenden Beschreibung von Ausführungsbeispielen und aus der Zeichnung selbst; dabei zeigt
- Fig. 1: eine Ansicht auf die Produktseite einer Platte bei Steigfilm-Verdampfung;
- Fig. 2: eine Ansicht auf die Rückseite der Platte gemäß Fig. 1;
- Fig. 3: eine Ansicht auf die Produktseite einer Platte bei Fallfilm-Verdampfung;
- Fig. 4: eine Ansicht auf die Rückseite der Platte gemäß Fig. 3;
- Fig. 5: ein persprektivischer Ausschnitt der Profilierung im Eintrittsbereich des Heizmediums;
- Fig. 6: ein perspektivischer Ausschnitt der Profilierung im mittleren Wärmeübertragungsbereich.

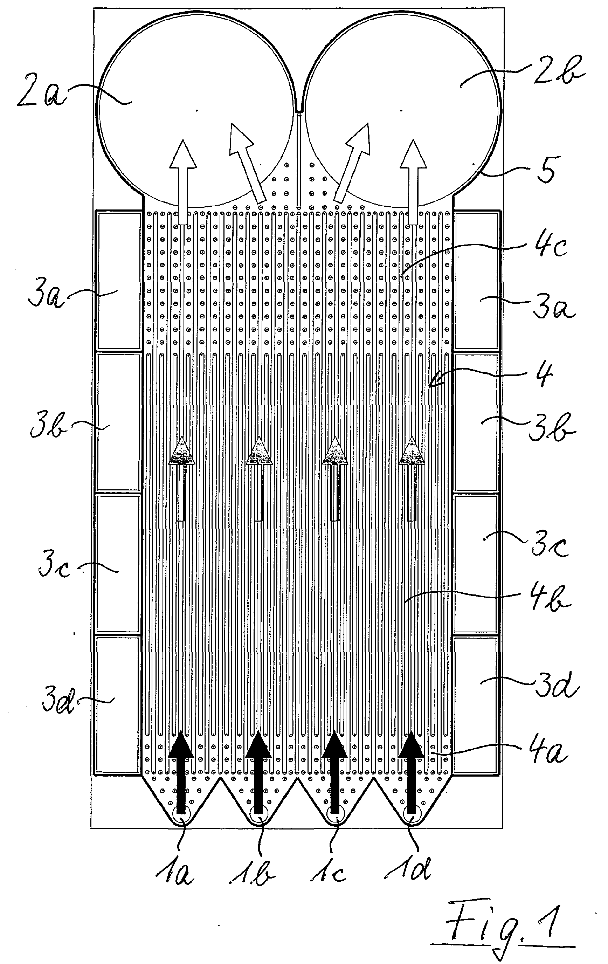

Wie die Zeichnungen zeigen, hat die Platte im Wesentlichen eine rechteckige Außenkontur. Die Produktzufuhr erfolgt in Fig. 1 über vier an der unteren Plattenschmalseite nebeneinander angeordnete und über diese Schmalseite gleichmäßig verteilte Einströmöffnungen 1a bis 1d, während der dampfförmige Produktaustritt über zwei Austrittsöffnungen 2a, 2b erfolgt, die an der oberen Plattenschmalseite angeordnet sind und sich jeweils nahezu über die halbe Plattenbreite erstrecken.

An den beiden Längsseiten der Platte, sind innerhalb der rechteckigen Plattenkontur jeweils vier annähernd rechteckige Kanäle angeordnet, die im Ausführungsbeispiel für die Zu- und Ableitung eines Heizmediums dienen. Dabei fungieren die drei oberen Kanäle 3a, 3b, 3c jeder Seite als Dampfkanäle, wogegen der untere Kanal 3d jeder Seite als Kondensatkanal dient. Die Kanäle sind unmittelbar übereinander angeordnet.

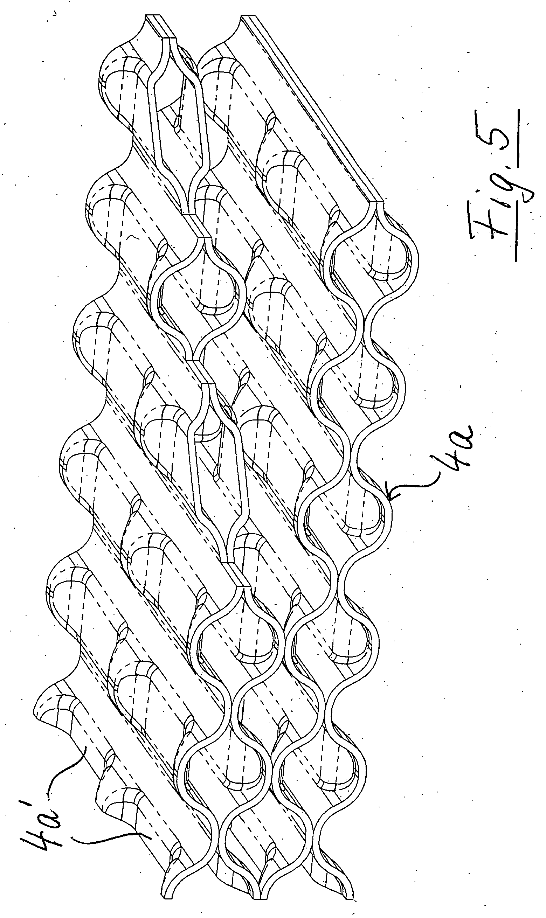

Zwischen den genannten Einström- und Abströmöffnungen an den Plattenschmalseiten und den genannten Kanälen an den Plattenlängsseiten befindet sich der Wärmeübertragungsbereich 4. Er besteht am unteren Ende im Bereich der Einströmöffnungen 1a bis 1 d zunächst aus einer noppenartigen Profilierung, die dann in eine Profilierung 4a übergeht, die in Figur 5 näher dargestellt ist. Sie bildet in Verbindung mit der entsprechenden Profilierung der Nachbarplatte eine Vielzahl kleiner, geradliniger Strömungskanäle in Plattenlängsrichtung, durch die das Produkt nach oben strömt. An der produkt-abgewandten Seite haben die Wellen jedoch eine Vielzahl mit Abstand aufeinanderfolgender Einbeulungen 4a'. Dadurch lässt die Profilierung für das Heiz- oder Kühlmedium Strömungen nicht nur in Längs- sondern auch in Querrichtung zu.

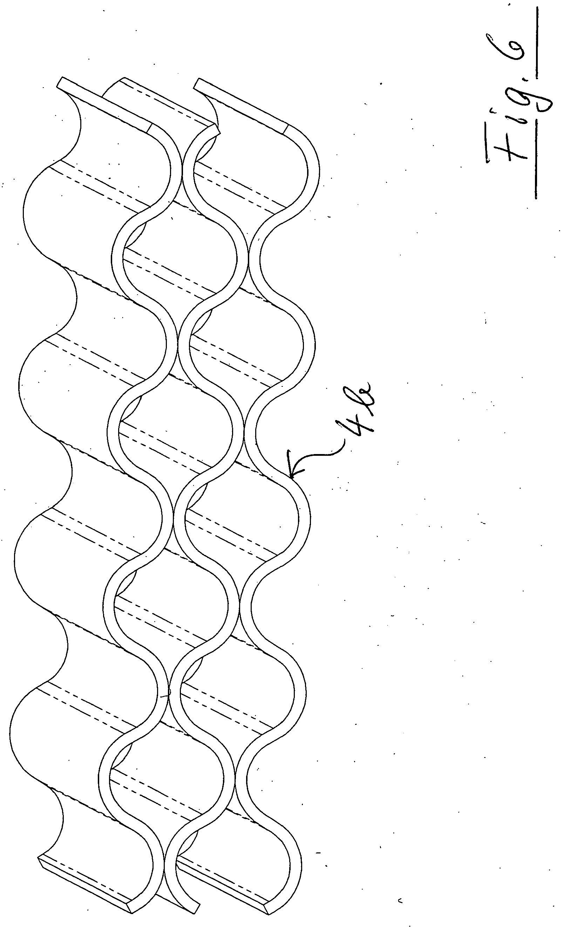

Hieran schließt sich eine wellenförmige Profilierung 4b an, die in Figur 6 dargestellt ist. Sie ist in Verbindung mit der entsprechenden Profilierung der Nachbarplatte so ausgebildet und orientiert, dass eine Vielzahl kleiner, geradliniger Teilströme in Plattenlängsrichtung entsteht, durch die das Produkt nach oben strömt. Eine Querströmung ist hier weder für das Produkt noch für das Heizoder Kühlmedium vorgesehen, kann aber durch Einbeulungen wie in Figur 5 durchaus gestattet werden. Die wellenförmige Profilierung 4b erstreckt sich etwa über zwei Drittel der Höhe des Wärmeübertragungsbereiches.

Der verbleibende obere Bereich wird durch eine Profilierung 4c gebildet, die Längs- und Querströmungen des Produkts wie auch des Heiz- oder Kühlmittels zulässt. Dieser Bereich liegt auf der Höhe der oberen Dampfkanäle 3a.

Auf der in Figur 1 sichtbaren Produktseite der Platte ist die Dichtung 5 so gelegt, dass der Wärmeübertragungsbereich 4 an die Einströmöffnungen 1a bis 1d sowie an die Abströmöffnungen 2a und 2b für das Produkt angeschlossen ist, wogegen die Dampf- und Kondensatkanäle 3a bis 3d gegenüber dem Wärmeübertragungsbereich abgesperrt sind. Dabei verläuft die Dichtung 5 jeweils etwa trichterförmig um die Einströmöffnungen 1a bis 1 d herum, derart, dass die Strömungsbreite von der Einströmöffnung ausgehend zum Wärmeübertragungsbereich 4 stetig zunimmt, bis die Dichtung abknickt, um die nächste Einströmöffnung trichterartig zu umfahren. Auf diese Weise werden die aus den Einströmöffnungen 1a bis 1d kommenden Strömungen gleichmäßig auf die volle Breite des Wärmeübertragungsbereiches 4 verteilt.

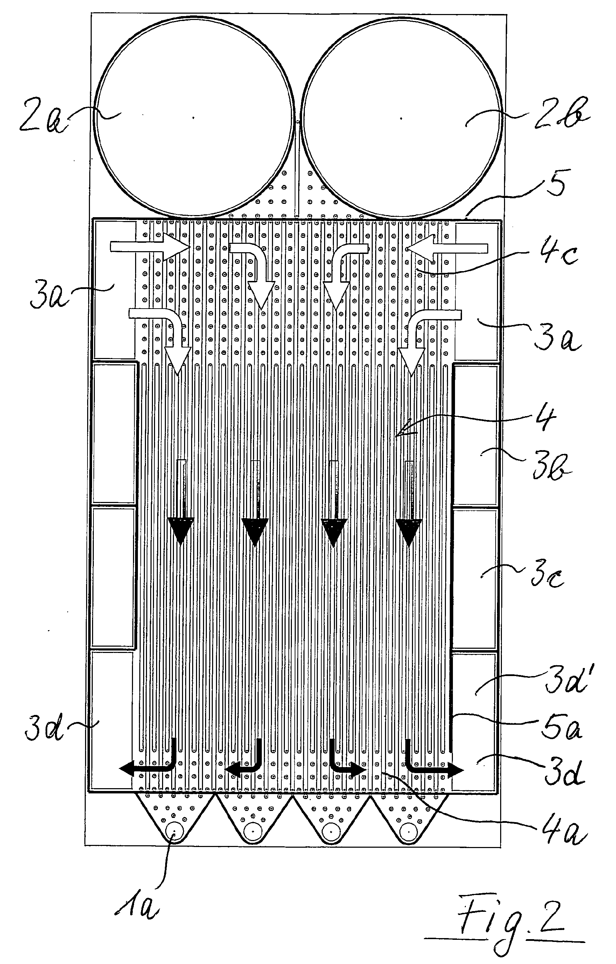

Figur 2 zeigt die Rückseite der Platte gemäß Fig. 1. Man erkennt, dass die Dichtung 5 hier so verlegt ist, dass die Einströmkanäle 1a bis 1 d und die Ausströmkanäle 2a, 2b für das Produkt gegenüber der Wärmeübertragungsfläche 4 abgesperrt sind und stattdessen die oberen Dampfkanäle 3a und die unteren Kanäle 3d, die als Kondensatkanäle fungieren, an den Wärmeübertragungsbereich 4 angeschlossen sind. Außerdem wird in Fig. 2 deutlich, dass der obere Wärmeübertragungsbereich 4c, der Querströmungen zulässt, wichtig ist, um den beidseits aus den Kanälen 3a einströmenden Dampf über die Plattenbreite zu verteilen. Entsprechendes gilt für den unteren Wärmeübertragungsbereich 4a, weil dort das Kondensat wieder nach außen in die Kondensatkanäle 3d geleitet werden muss.

Die Dichtung 5 sperrt die Dampfkanäle 3b und 3c nicht nur gegenüber dem Wärmeübertragungsbereich 4, sondern auch untereinander und nach außen ab, damit diese Kanäle gegebenenfalls für einen zweiten Heiz- oder Kühlmittel-Kreislauf verwendet werden können. Für eine interne Verbindung der Dampfkanäle untereinander braucht lediglich der eine Dichtungsstreifen, der zwischen ihnen angeordnet ist, an mehreren Platten entfernt zu werden.

Außerdem ist in Figur 2 am rechten Kondensatkanal 3d eine vorteilhafte Alternative in Form eines vertikalen Dichtungsstreifens 5 a angedeutet. Dieser Dichtungsstreifen verschließt den oberen Teil 3d' des Kondensatkanals 3d gegenüber der Wärmeübertragungsfläche 4, wogegen der kürzere untere Teil für den Kondensat-Eintritt frei bleibt. Dadurch kann der obere Teil 3d' als Luftsammler für den Kondensatkanal fungieren.

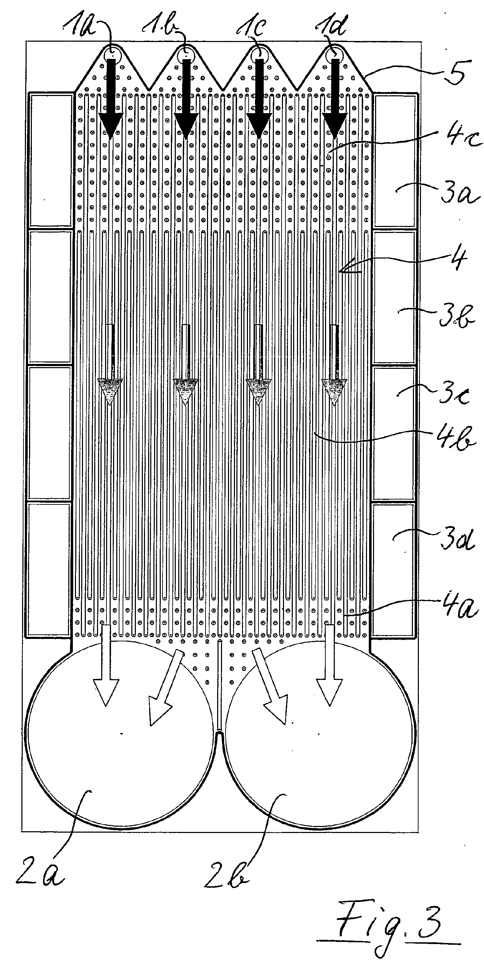

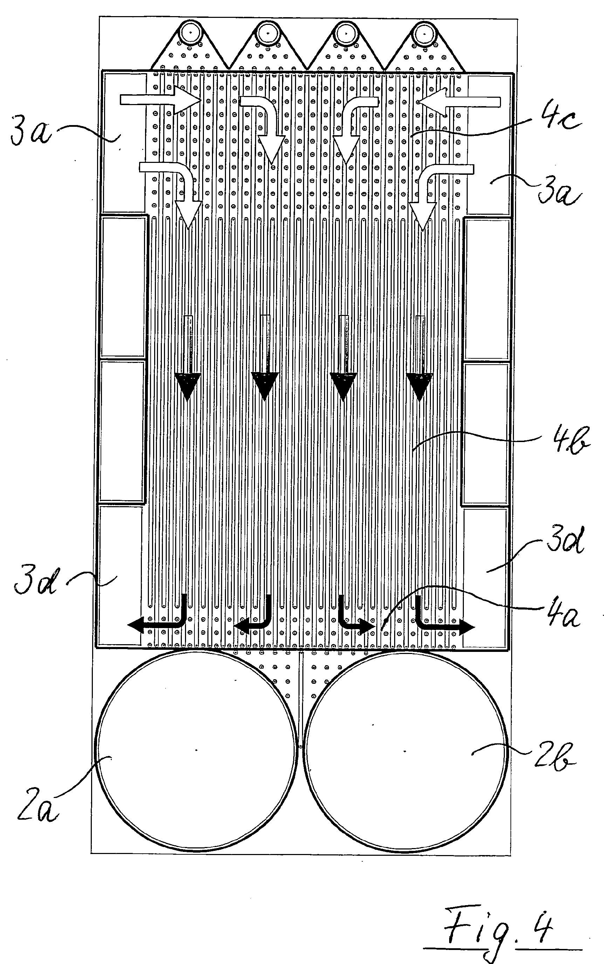

Die Figuren 3 und 4 zeigen den Einsatz der erfindungsgemäßen Platte als Fallfilm-Verdampfer. Das heißt, dass die produktseitigen Einströmöffnungen 1a bis 1 d nunmehr an der oberen Plattenschmalseite und die produktseitigen Abströmöffnungen 2a und 2b an der unteren Plattenschmalseite angeordnet sind. Wesentlich dabei ist, dass die Einprägungen für die Dichtung 5 identisch übereinstimmen mit dem zuvor beschriebenen Anwendungsfall des Steigfilmverdampfers gemäß Figur 1 und 2. Man kann daher für beide Einsatzfälle mit nahezu den gleichen Platten arbeiten und braucht sie nur um 180 Grad um ihre Querachse zu drehen.

Der einzige Unterschied besteht in der Aufteilung des Wärmeübergangsbereiches 4, der diese Klappung nicht mitmacht. Vielmehr bleibt hier der Wärmeübertragungsbereich 4c. Dieser Wärmeübertragungsbereich 4c im oberen Plattenbereich, nämlich in Höhe der Dampfzufuhrkanäle 3a, vgl. Fig. 4, hat zweckmäßig die in Figur 5 gezeigte Profilierung, das heißt, dass produktseitig nur Strömungen in Plattenlängsrichtung zugelassen werden, rückseitig hingegen sowohl in Längsrichtung wie auch in Querrichtung. Der untere Wärmeübertragungsbereich 4a behält im Wesentlichen seine Position bei, mündet jetzt aber zu den produktseitigen Abströmöffnungen 2a, 2b beziehungsweise zu den Kondensatkanälen 3d und lässt beidseitig sowohl Längs- als auch Querströmungen zu.

Somit kann man für Steigfilm- und Fallfilmverdampfer den gleichen Prägestempel für den äußeren Bereich der Platte und insbesondere die Dichtungsprofile verwenden und braucht lediglich den Stempel für den Wärmeübertragungsbereich 4 relativ hierzu zu verschieben.

Üblicherweise haben die Platten oben und unten Aussparungen zum Einhängen in Druckgestelle. Diese Aussparungen, die in der Zeichnung nicht dargestellt sind, haben zweckmäßig die gleiche Kontur, damit die vorbeschriebene Drehung der Platten um ihre Querachse problemlos möglich ist.

Zur Bildung eines Plattenstapels wird jede zweite Platte um 180 Grad um ihre Längsachse gedreht, damit die Platten Rücken-an-Rücken liegen. Wenn die Dichtungsnut in der Mittelebene jeder Platte liegt, kann für Produkt- und Dampfseite eine Dichtung mit der gleichen Höhe benutzt werden. Liegt die Dichtungsebene hingegen in einer Nullebene, so kann die Dichtung der Dampfplatte durch eine Schweißnaht, Lötverbindung oder dergleichen ersetzt werden.

## Patentansprüche

1. Plattenwärmeübertrager, der als Verdampfer und/oder Kondensator fungiert, umfassend mehrere gestapelte Platten, wobei die Platten jeweils einen Wärmeübertragungsbereich (4) und randseitige Durchtrittsöffnungen (1, 2, 3) für die wärmeübertragenden Medien, nämlich ein zumindest teilweise zu verdampfendes oder zu kondensierendes Produkt einerseits und ein Heiz- oder Kühlmedium andererseits aufweisen und durch entsprechend verlegte Dichtungen (5) eine Gruppe der Durchtrittsöffnungen dem einen Medium und der einen Seiten der jeweiligen Platte, eine andere Gruppe der Durchtrittsöffnungen dem anderen Medium und der anderen Seite der jeweiligen Platte zugeordnet ist, wobei die dem zu verdampfenden Produkt zugeordnete Gruppe von Durchtrittsöffnungen an der Einströmseite der jeweiligen Platte aus einer Vielzahl nebeneinander angeordneter Einströmöffnungen (1a bis 1 d) besteht, die in einer zum benachbarten Plattenrand nahezu senkrechten Richtung unmittelbar in den Wärmeübertragungsbereich (4) der Platte münden, und wobei die dem Heiz- oder Kühlmedium zugeordnete Gruppe von Durchtrittsöffnungen (3) entlang zumindest eines Längsrandes der jeweiligen Platte mehrere in Plattenlängsrichtung nebeneinander angeordnete Kanäle für das Heiz- oder Kühlmedium bildet, wobei einer der Kanäle als Kondensatorkanal (3d) und weitere Kanäle als Dampfkanäle (3a bis 3c) ausgebildet und entlang der Längsränder der Platten angeordnet sind,
**dadurch gekennzeichnet,**
**dass** die Dampfkanäle (3a bis 3c) und der Kondensatkanal (3d) unmittelbar nebeneinander angeordnet sind und dass die Dichtung (5) so verlegt ist, dass einer der Dampfkanäle (3a) und der Kondensatkanal (3d) an den Wärmeübertragungsbereich angeschlossen sind und die weiteren Dampfkanäle (3b, 3c) nicht nur gegenüber dem Wärmeübertragungsbereich (4), sondern auch untereinander und nach außen abgesperrt sind, damit diese Kanäle gegebenenfalls für einen zweiten Heiz- oder Kühlmittel-Kreislauf verwendet werden können, und dass benachbarte Dampfkanäle (3a bis 3c) an mehreren Platten durch Weglassung ihrer Zwischendichtung (5) intern miteinander verbindbar sind.

2. Plattenwärmeübertrager nach Anspruch 1,
**dadurch gekennzeichnet,**
**dass** die Einströmöffnungen (1a bis 1 d) des zu verdampfenden Produktes längs einer Platten-Schmalseite angeordnet sind.

3. Plattenwärmeübertrager nach Anspruch 1,
**dadurch gekennzeichnet,**
**dass** sich die Einströmöffnungen (1a bis 1 d) des zu verdampfenden Produktes nahezu über die gesamte Breite des Wärmeübertragungsbereiches erstrecken.

4. Plattenwärmeübertrager nach Anspruch 1,
**dadurch gekennzeichnet,**
**dass** die außen an den Einströmöffnungen angeordnete Dichtung (5) jeweils in den Zwischenraum zwischen benachbarten Einströmöffnungen (1a bis 1 d) hineinläuft.

5. Plattenwärmeübertrager nach Anspruch 4,
**dadurch gekennzeichnet,**
**dass** die genannte Dichtung (5) weiter in den Zwischenraum hineinläuft als es dem Durchmesser der Einströmöffnungen entspricht.

6. Plattenwärmeübertrager nach Anspruch 4 oder 5,
**dadurch gekennzeichnet,**
**dass** die genannte Dichtung (5) unter Bildung sich in Richtung zum Wärmeübertragungsbereich (4) jeweils erweiternder Strömungsquerschnitte verläuft.

7. Plattenwärmeübertrager nach Anspruch 1,
**dadurch gekennzeichnet,**
**dass** der Wärmeübertragungsbereich (4) zumindest in der den Einströmöffnungen zugeordneten Plattenhälfte eine Profilierung (4b) aufweist, die in Kombination mit der Profilierung der Nachbarplatte eine Vielzahl nahezu geradliniger Einzelkanäle erzeugt.

8. Plattenwärmeübertrager nach Anspruch 7,
**dadurch gekennzeichnet,**
**dass** die genannten Einzelkanäle in Plattenlängsrichtung verlaufen.

9. Plattenwärmeübertrager nach Anspruch 1,
**dadurch gekennzeichnet;**
**dass** der Wärmeübertragungsbereich (4c) zu der oder den Einströmöffnungen (3a) des Heizmediums hin eine sowohl Quer- wie auch Längsströmung zulassende Profilierung aufweist.

10. Plattenwärmeübertrager nach Anspruch 1,
**dadurch gekennzeichnet,**
**dass** zumindest einer der beiden Längsränder der Platten nahezu über die gesamte Länge durch Dampf- und Kondensatkanäle (3a bis 3c) gebildet ist.

11. Plattenwärmeübertrager nach Anspruch 1,
**dadurch gekennzeichnet,**
**dass** der Kondensatkanal (3d) von einer Dichtung (5) umgeben ist, die eine Fläche umschließt, die mindestens 50%, vorzugsweise mindestens 75% derjenigen Fläche beträgt, die von der Dichtung (5) des vom Kondensatkanal am weitesten entfernten Dampfkanales (3a) umschlossen wird.

12. Plattenwärmeübertrager nach Anspruch 11,
**dadurch gekennzeichnet,**
**dass** der Kondensatkanal (3d) in gewünschter Größe aus der von der Dichtung (5) umschlossenen Fläche zu bilden ist.

13. Plattenwärmeübertrager nach Anspruch 11,
**dadurch gekennzeichnet,**
**dass** innerhalb des Kondensatkanals (3d) im oberen Bereich durch einen Dichtungsabschnitt (5a) ein gegenüber dem Wärmeübertragungsbereich (4) abgeschirmter Kanal (3d') zur Kondensat-Entlüftung gebildet ist.

14. Plattenwärmeübertrager nach Anspruch 1,
**dadurch gekennzeichnet,**
**dass** innerhalb eines ungenutzten Dampfkanals (3a bis 3c) Spannmittel zum Zusammenpressen mehrerer Platten verlegt sind.

15. Plattenwärmeübertrager nach Anspruch 1,
**dadurch gekennzeichnet,**
**dass** die Platten jeweils zumindest auf einer Seite eine etwa mittig in Längsrichtung durchlaufende Dichtung zur Bildung zweier getrennter nebeneinander angeordneter Strömungsquerschnitte aufweist.

16. Plattenwärmeübertrager nach Anspruch 1,
**dadurch gekennzeichnet,**
**dass** die Platten jeweils in Mittellängsrichtung in zwei separate Plattenhälften geteilt ist, die im Verbund mit geteilten oder ungeteilten Platten zusammenpassen.

17. Plattenwärmeübertrager nach Anspruch 16,
**dadurch gekennzeichnet,**
**dass** zwischen den Plattenhälften Spannmittel zum Zusammenpressen der beiden benachbarten Plattenpakete verlegt sind.

## Claims

1. Plate heat exchanger which functions as an evaporator and/or condenser, comprising a plurality of stacked plates, wherein the plates each have a heat transfer region (4) and edge-side through-openings (1, 2, 3) for the heat-transfer media, that is to say, on the one hand, a product which is at least partly to be evaporated or condensed and, on the other hand, a heating or cooling medium, and, by means of appropriately positioned seals (5), one group of through-openings is associated with one medium and with one side of the plate in question and a different group of through-openings is associated with the other medium and with the other side of the plate in question, wherein the group of through-openings that is associated with the product to be evaporated on the inflow side of the plate in question consists of a multiplicity of inflow openings (1a to 1d) which are arranged one next to the other and which open directly into the heat transfer region (4) of the plate in a direction virtually perpendicular to the adjacent edge of the plate, and wherein the group of through-openings (3) that is associated with the heating or cooling medium forms along at least one longitudinal edge of the plate in question a plurality of channels for the heating or cooling medium which are arranged one next to the other in the longitudinal direction of the plate, one of the channels being in the form of a condensate channel (3d) and further channels being in the form of vapour channels (3a to 3c) and being arranged along the longitudinal edges of the plates,
**characterised in that**
the vapour channels (3a to 3c) and the condensate channel (3d) are arranged immediately next to one another, and the seal (5) is positioned so that one of the vapour channels (3a) and the condensate channel (3d) are connected to the heat transfer region and the further vapour channels (3b, 3c) are shut off not only from the heat transfer region (4) but also from one another and towards the outside in order that those channels can optionally be used for a second heating or cooling medium circuit, and adjacent vapour channels (3a to 3c) on a plurality of plates are connectible to one another internally by omission of their intermediate seal (5).

2. Plate heat exchanger according to claim 1,
**characterised in that**
the inflow openings (1a to 1d) of the product to be evaporated are arranged along a narrow side of the plate.

3. Plate heat exchanger according to claim 1,
**characterised in that**
the inflow openings (1 a to 1 d) of the product to be evaporated extend over virtually the entire width of the heat transfer region.

4. Plate heat exchanger according to claim 1,
**characterised in that**
the seal (5) arranged around the outside of the inflow openings in each case extends into the intermediate space between adjacent inflow openings (1 a to 1 d).

5. Plate heat exchanger according to claim 4,
**characterised in that**
the said seal (5) extends further into the intermediate space than corresponds to the diameter of the inflow openings.

6. Plate heat exchanger according to claim 4 or 5,
**characterised in that**
the said seal (5) extends in such a way as to form flow cross-sections that each widen in the direction towards the heat transfer region (4).

7. Plate heat exchanger according to claim 1,
**characterised in that**
the heat transfer region (4), at least in the half of the plate associated with the inflow openings, has profiling (4b) which in combination with the profiling of the adjacent plate generates a multiplicity of virtually straight individual channels.

8. Plate heat exchanger according to claim 7,
**characterised in that**
the said individual channels run in the longitudinal direction of the plate.

9. Plate heat exchanger according to claim 1,
**characterised in that**
the heat transfer region (4c) towards the inflow opening(s) (3a) of the heating medium has profiling that allows both transverse flow and longitudinal flow.

10. Plate heat exchanger according to claim 1,
**characterised in that**
at least one of the two longitudinal edges of the plates is formed virtually over its entire length by vapour and condensate channels (3a to 3c).

11. Plate heat exchanger according to claim 1,
**characterised in that**
the condensate channel (3d) is surrounded by a seal (5) which encloses an area that is at least 50 %, preferably at least 75 %, of the area enclosed by the seal (5) of the vapour channel (3a) furthest away from the condensate channel.

12. Plate heat exchanger according to claim 11,
**characterised in that**
the condensate channel (3d) can be formed in the desired size from the area enclosed by the seal (5).

13. Plate heat exchanger according to claim 11,
**characterised in that**
inside the condensate channel (3d) in the upper region there is formed by means of a seal portion (5a) a channel (3d') for deaeration of the condensate, which channel is screened off from the heat transfer region (4).

14. Plate heat exchanger according to claim 1,
**characterised in that**
inside an unused vapour channel (3a to 3c) there are positioned clamping means for pressing a plurality of plates together.

15. Plate heat exchanger according to claim 1,
**characterised in that**
the plates each have on at least one side a seal that passes approximately centrally through the plate in the longitudinal direction to form two separate flow cross-sections arranged one next to the other.

16. Plate heat exchanger according to claim 1,
**characterised in that**
the plates are each divided in the central longitudinal direction to form two separate plate halves which fit together in combination with divided or undivided plates.

17. Plate heat exchanger according to claim 16,
**characterised in that**
between the plate halves there are positioned clamping means for pressing the two adjacent plate packages together.

## Revendications

1. Echangeur thermique à plaques qui fonctionne comme évaporateur et/ou condenseur, comprenant plusieurs plaques empilées, les plaques présentant chacune une zone de transfert de chaleur (4) et des ouvertures de passage (1, 2, 3) sur les bords pour les fluides de transfert thermique, à savoir un produit à évaporer ou à condenser au moins partiellement d'une part et un fluide de chauffage ou de refroidissement d'autre part et, à travers des joints (5) posés de façon correspondante, un groupe d'ouvertures de passage étant associé à un fluide et à un côté de la plaque respective, un autre groupe d'ouvertures de passage à l'autre fluide et à l'autre côté de la plaque respective, le groupe d'ouvertures de passage associé au produit à évaporer du côté admission de la plaque respective étant composé d'une pluralité d'ouvertures d'admission (1a à 1d) disposées les unes à côté des autres, qui débouchent, dans une direction quasi perpendiculaire au bord de plaque adjacent, directement dans la zone de transfert de chaleur (4) de la plaque, et le groupe d'ouvertures de passage (3) associé au fluide de chauffage ou de refroidissement formant le long d'au moins un bord longitudinal de la plaque respective plusieurs canaux disposés les uns à côté des autres dans la direction longitudinale de la plaque pour le fluide de chauffage ou de refroidissement, un des canaux étant conçu comme canal de condensat (3d) et les autres canaux comme canaux de vapeur (3a à 3c) et disposés le long des bords longitudinaux des plaques,
**caractérisé en ce**
**que** les canaux de vapeur (3a à 3c) et le canal de condensat (3d) sont disposés directement les uns à côté des autres et que les joints (5) sont posés de telle sorte qu'un des canaux de vapeur (3a) et le canal de condensat (3d) soient raccordés à la zone de transfert de chaleur et les autres canaux de vapeur (3b, 3c) soient fermés non seulement par rapport à la zone de transfert de chaleur (4), mais aussi les uns par rapport aux autres et vers l'extérieur, afin que ces canaux puissent être utilisés le cas échéant pour un deuxième circuit de chauffage ou de refroidissement, et que des canaux de vapeur (3a à 3c) adjacents sur plusieurs plaques puissent être reliés entre eux de manière interne par omission de leur joint intermédiaire (5).

2. Echangeur thermique à plaques selon la revendication 1,
**caractérisé en ce**
**que** les ouvertures d'admission (1a à 1d) du produit à évaporer sont disposées le long d'un petit côté des plaques.

3. Echangeur thermique à plaques selon la revendication 1,
**caractérisé en ce**
**que** les ouvertures d'admission (1a à 1d) du produit à évaporer s'étendent quasiment sur toute la largeur de la zone de transfert de chaleur.

4. Echangeur thermique à plaques selon la revendication 1,
**caractérisé en ce**
**que** le joint (5) disposé extérieurement sur les ouvertures d'admission pénètre chaque fois dans l'intervalle entre des ouvertures d'admission (1a à 1d) adjacentes.

5. Echangeur thermique à plaques selon la revendication 4,
**caractérisé en ce que** ledit joint (5) pénètre plus loin dans l'intervalle que ce qui correspond au diamètre des ouvertures d'admission.

6. Echangeur thermique à plaques selon la revendication 4 ou 5,
**caractérisé en ce que** ledit joint (5) s'étend en formant des sections transversales d'écoulement s'élargissant chaque fois en direction de la zone de transfert de chaleur (4).

7. Echangeur thermique à plaques selon la revendication 1,
**caractérisé en ce**
**que** la zone de transfert de chaleur (4) présente au moins dans la moitié de plaque associée aux ouvertures d'admission un profilage (4b) qui, en combinaison avec le profilage de la plaque voisine, produit une pluralité de canaux individuels quasiment rectilignes.

8. Echangeur thermique à plaques selon la revendication 7,
**caractérisé en ce**
**que** lesdits canaux individuels s'étendent dans la direction longitudinale des plaques.

9. Echangeur thermique à plaques selon la revendication 1,
**caractérisé en ce**
**que** la zone de transfert de chaleur (4c) présente un profilage autorisant un écoulement aussi bien transversal que longitudinal en direction de la ou des ouvertures d'admission (3a) du fluide de chauffage.

10. Echangeur thermique à plaques selon la revendication 1,
**caractérisé en ce**
**qu'**au moins un des deux bords longitudinaux des plaques est formé quasiment sur toute la longueur par des canaux de vapeur et de condensat (3a à 3c).

11. Echangeur thermique à plaques selon la revendication 1,
**caractérisé en ce**
**que** le canal de condensat (3d) est entouré par un joint (5) qui enclos une surface qui est égale à au moins 50 %, de préférence au moins 75 % de la surface qui est enclose par le joint (5) du canal de vapeur (3a) le plus éloigné du canal de condensat.

12. Echangeur thermique à plaques selon la revendication 11,
**caractérisé en ce**
**que** le canal de condensat (3d) est à former dans la taille souhaitée à partir de la surface enclose par le joint (5).

13. Echangeur thermique à plaques selon la revendication 11,
**caractérisé en ce**
**qu'**un canal (3d') protégé par rapport à la zone de transfert de chaleur (4) est formé à l'intérieur du canal de condensat (3d), dans la zone supérieure, par une portion de joint (5a), pour la purge d'air du condensat.

14. Echangeur thermique à plaques selon la revendication 1,
**caractérisé en ce**
**que** des moyens de serrage pour presser plusieurs plaques les unes contre les autres sont posés à l'intérieur d'un canal de vapeur (3a à 3c) inutilisé.

15. Echangeur thermique à plaques selon la revendication 1,
**caractérisé en ce**
**que** les plaques présentent, au moins sur un côté, un joint à peu près central s'étendant de façon continue dans la direction longitudinale pour former deux sections transversales d'écoulement disposées l'une à côté de l'autre.

16. Echangeur thermique à plaques selon la revendication 1,
**caractérisé en ce**
**que** les plaques sont chaque fois divisées dans la direction longitudinale médiane en deux moitiés de plaque séparées qui s'adaptent en association avec des plaques divisées ou non divisées.

17. Echangeur thermique à plaques selon la revendication 16,
**caractérisé en ce**
**que** des moyens de serrage pour presser l'un contre l'autre les deux paquets de plaques adjacents sont posés entre les moitiés de plaque.
